# EUROPEAN PATENT SPECIFICATION

(11) **EP 3 176 455 B1**
(45) Date of publication and mention of the grant of the patent: **19.08.2020**
(21) Application number: 15306922.4
(22) Date of filing: 03.12.2015
(51) Int. Cl.: F16D 23/14

(54) **CLUTCH BEARING DEVICE**
KUPPLUNGSLAGERVORRICHTUNG
DISPOSITIF DE PALIER D'EMBRAYAGE

(43) Date of publication of application: 07.06.2017
(73) Proprietor: Aktiebolaget SKF, 415 50 Göteborg (SE)
(72) Inventor: ARNAULT, Benoit, 37540 SAINT CYR SUR LOIRE (FR); GAULTIER, Stéphane, 37360 SONZAY (FR)
(74) Representative: Schonecke, Mitja

(56) References cited:
- FR-A1- 2 995 375
- JP-A- 2003 222 163
- JP-U- H01 174 637
- US-A- 4 466 527

## Description

The present invention relates to the field of clutch release bearing devices intended to act on the diaphragm of a clutch, in particular for a motor vehicle.

Such a clutch release bearing device generally comprises a rolling bearing comprising a rotating ring and a non-rotating ring, the rotating ring being provided with a bearing surface coming into permanent contact with a clutch member, and in particular with the diaphragm of the clutch.

The device also comprises an operating element which supports the rolling bearing and which can slide axially with respect to a guide tube under the action of a clutch-release fork having end fingers capable of coming into contact with a rear plate of said operating element. The device further comprises a spring to axially retain the fingers of the clutch-release fork. The rear plate of the operating element is provided with two facing ears or lugs in order to obtain a radial centring of the clutch-release fork relative to said plate. Such a device is know from FR 2 995 375 A1.

During storage and transport of the device, angular movements of the spring relative to the rear plate may occur. In this case, it can be difficult for a motor vehicle manufacturer to mount the clutch-release fork. Besides, such angular movements of the spring may also occur in operation. Accordingly, the fingers of the clutch-release fork can be axially disconnected from the clutch release bearing device.

One aim of the present invention is to overcome these drawbacks.

It is a particular object of the present invention to provide a clutch release bearing device having a good reliability.

In one embodiment, the clutch bearing device comprises a bearing including an inner ring and an outer ring, and an operating element mounted into a bore of the bearing and secured to one of the rings. The operating element comprises a rear plate provided with a flange and with at least one centring lug extending axially from said flange on the side opposite to the bearing. The operating element further comprises a spring provided with a main body disposed axially on the side of a front abutment surface of the flange of the rear plate, and with at least one centring part extending from said body, located partly above an outer abutment surface of the centring lug and having an end portion axially facing a rear abutment surface of said flange. The outer abutment surface extends axially.

The rear plate further comprises at least one protrusion provided on said the centring lug, protruding relative to the outer abutment surface, and adapted to cooperate by contact with the centring part of the spring so as to prevent angular movement of said spring relative to the rear plate at least in one direction.

With such protrusion, the angular position of the spring relative to the rear plate is maintained during the storage and the transport of the device. In operation, the angular displacement of said spring is also prevented.

In one embodiment, said centring part of the spring comprises a radial portion extending from the main body, an axial portion extending from said radial portion and located above the outer abutment surface of said centring lug, and the end portion connected to said axial portion. Preferably, said protrusion may be adapted to cooperate by contact with the axial portion of said centring part of the spring.

In one embodiment, the rear plate comprises two centring lugs facing each other, the spring comprising two centring parts facing each other, and the rear plate comprising at least two protrusions adapted to cooperate by contact with at least one of said centring parts so as to prevent angular movement of said spring relative to the rear plate in two opposite directions. The protrusions of the rear plate may be symmetrical with respect to an axial median plane containing an axis of the bearing.

In one embodiment, the rear plate and said protrusion(s) are made in one part. Advantageously, said protrusion(s) are made by local plastic deformation of the rear plate. In one embodiment, the rear plate is made of stamped metal sheet. Alternatively, the rear plate may be made from synthetic material.

In one embodiment, the operating element may further comprise a casing radially surrounding the bearing.

The operating element may further comprise a sleeve mounted into the bore of the bearing, the rear plate being connected to the sleeve. In one embodiment, the sleeve is overmouled onto the rear plate.

In one embodiment, the spring may be disposed into a groove formed between the casing and the front abutment surface of the flange of the rear plate. Alternatively, the spring could be disposed into a groove formed between a radial portion of the sleeve and the front abutment surface of the flange of the rear plate.

The present invention and its advantages will be better understood by studying the detailed description of specific embodiments given by way of non-limiting examples and illustrated by the appended drawings on which:
- Figure 1 is a cross-section of a clutch release bearing device,
- Figure 2 is a front view of the device of Figure 1,
- Figure 3 is a perspective view of the device of Figure 1,
- Figure 4 is a section on IV-IV of Figure 2,
- Figure 5 is a front view of a clutch release bearing device according to an example of the invention,
- Figure 6 is a perspective view of a rear plate of the device of Figure 5,
- Figure 7 is a front view of a clutch release bearing device according to another example of the invention, and
- Figure 8 is a perspective view of a rear plate of the device of Figure 7.

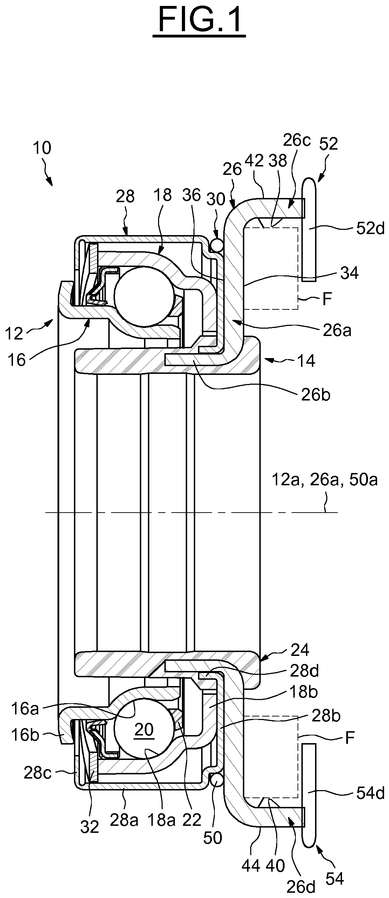

As shown on Figure 1, a clutch release bearing device 10 comprises a rolling bearing 12 and an operating element 14 supporting said rolling bearing and intended to be moved axially with respect to a guide tube (not shown).

The rolling bearing 12, of axis 12a, comprises a rotating inner ring 16, a non-rotating outer ring 18, a row of rolling elements 20, which are provided here in the form of balls and are mounted between said rings, and a cage 22 for maintaining the regular circumferential spacing of the rolling elements.

The inner and outer rings 16, 18 may advantageously be made of stamped metal sheet. The inner ring 16 delimits a toroidal track or raceway 16a for the rolling elements 20 oriented radially outwards. The inner ring 16 comprises a radial portion 16b provided to come axially into contact with a diaphragm of the clutch (not shown). The outer ring 18 delimits a toroidal track or raceway 18a for the rolling elements 20 oriented radially inwards. The outer ring 18 comprises a radial portion 18b in axial contact with the operating element 14.

The operating element 14 comprises a guide sleeve 24 mounted into the bore of the rolling bearing 12 and a rear plate 26 secured to the sleeve. The operating element 14 also comprises an annular casing 28 to axially retain the rolling bearing 10 relative to the guide sleeve 24, and a spring 30 to retain fingers F of the clutch-release fork (illustrated in dashed lines). As will be described later, the rear plate 26 is designed to retain the spring 30 in the circumferential direction.

The guide sleeve 24 is advantageously made from synthetic material. The sleeve 24 has an annular form. In the disclosed example, the guide sleeve 24 is overmoulded on the rear plate 26. Alternatively, the rear plate 26 may be secured to the guide sleeve 24 by any other appropriate means.

The casing 28 radially surrounds the outer ring 18 of the rolling bearing. The casing 28 may advantageously be made of stamped metal sheet. The casing 28 comprises an outer axial portion 28a radially surrounding the rolling bearing 10 and two lateral radial portions 28b and 28c, each radial portion extending radially inwards one end of the outer axial portion 28a. The radial portion 28b is in axial contact against the rolling bearing 10 on one side and in axial contact with the rear plate 26 on the other side. The radial portion 28b axially bears against the outer ring 18. The casing 28 also comprises an inner axial portion 28d extending the radial portion 28b. In the disclosed example, the guide sleeve 24 is overmoulded onto the radial portion 28b. A corrugated washer 32 is axially interposed between the outer ring 18 and the radial portion 28c of the casing.

The rear plate 26 may advantageously be made of stamped metal sheet. The rear plate 26, of axis 26a coaxial with the axis 12a, comprises an annular radial base or flange 26a. In the disclosed example, the rear plate 26 further comprises an annular inner axial portion 26b extending from said flange 26a axially on the side of the rolling bearing. The axial portion 26b extends a small-diameter edge of the flange 26a. In the disclosed example, the guide sleeve 24 is overmoulded on the axial portion 26b of the rear plate.

The flange 26a delimits a rear abutment surface 34 for the fingers F of the clutch-release fork which is oriented axially on the side opposite to the rolling bearing 10. The abutment surface 34 is oriented axially outwards. The abutment surface 34 extends radially. The fingers F axially come into contact against the abutment surface 34. Axially on the side opposite to the abutment surface 34, the flange 26a comprises a front abutment surface 36 onto which axially bears the casing 28 and oriented axially on the side opposite of the rolling bearing 10. The abutment surface 36 extends radially. The flange 26a is axially delimited by the opposite abutment surfaces 34, 36. In the disclosed example, the flange 26a extends radially outwards beyond the casing 28.

The rear plate 26 also comprises two centring lugs 26c, 26d extending axially from the flange 26a on the side opposite to the rolling bearing. The lugs 26c, 26d enable to obtain a radial centring of the clutch-release fork with respect to the rear plate 26. Each lug 26c, 26d delimits a bearing surface 38, 40 for one of the fingers of the clutch-release fork which is oriented radially inwards. The bearing surfaces 38, 40 extend axially. Each lug 26c, 26d also delimits an outer abutment surface 42, 44 for the spring 30 which is oriented radially outwards. The abutment surface 42, 44 extend axially. Each lug 26c, 26d is delimited radially by the opposite bearing surfaces 38, 40 and the abutment surface 42, 44. The lugs 26c, 26d radially face each other. The lugs 26c, 26d extend from a large-diameter edge of the flange 26a. In the disclosed example, the lugs 26c, 26d are identical one to another and symmetrical with respect to an axial median plane P containing the axis 12a of the rolling bearing.

As shown on Figures 1 to 3, the spring 30 comprises a main body 50 and two first and second opposite centring parts 52, 54 extending from said body and provided to axially retain the fingers F of the clutch-release fork. The spring 30 is made in one part and be made for example of metal.

The main body 50 of the spring is axially interposed between the casing 28 and the rear plate 26 and maintained therebetween. The main body 50 is located into an annular groove delimited between the casing 28 and the flange 26a of the rear plate. The groove is delimited between the casing 28 and the front abutment surface 36 of the flange 26a. The main body 50 of the spring axially faces the front abutment surface 36. In the disclosed example, the main body 50 is mounted axially against the front abutment surface 36. Alternatively, a slight axial gap may be provided between the main body 50 and the abutment surface 36. The main body 50 of the spring extends in the circumferential direction around an axis 50a coaxial with the axis 12a of the rolling bearing. The main body 50 has the shape of an arc of a circle. The main body 50 may extend along an angular sector which is comprised between 210° and 270°, and for example equal to 240°. The main body 50 radially surrounds the radial portion 28b of the casing. The main body 50 radially surrounds the outer ring 18.

Each end of the main body 50 of the spring is extended by one of the centring parts 52, 54. The centring parts 52, 54 are radially opposite to each other. The centring parts 52, 54 are identical one to another and symmetrical with respect to the axial median plane P containing the axis 12a of the rolling bearing. Each centring part 52, 54 comprises a radial portion 52a, 54a extending radially outwards from the main body 50, an axial portion 52b, 54b extending axially said radial portion on the side opposite to the rolling bearing 10, a linking portion 52c, 54c extending said axial portion while being parallel to the main body 50, and an end portion 52d, 54d extending said linking portion radially inwards. Alternatively, it could be possible to foresee a spring 30 with a different design, for example with centring parts deprived of linking portions 52c and 54c, and an adapted shape of the centring lugs of the rear plate. In this case, each end portion 52d, 54d of the spring is directly connected to the radial portion 52a, 54a.

In the disclosed example, the radial portion 52a, 54a of each centring part of the spring comes in axial contact with the front abutment surface 36 of the flange 26a of the rear plate. Alternatively, the radial portion 52a, 54a may be axially spaced apart from the abutment surface 36. The axial portion 52b, 54b and the linking portions 52c, 54c of each centring part are located above the abutment surface 42, 44 of the associated centring lug 26c, 26d of the rear plate. Said axial and linking portions are radially spaced apart from the associated abutment surface 42, 44. Alternatively, said axial and linking portions may come into radial contact with the associated abutment surface 42, 44.

Each end portion 52d, 54d of the centring parts of the spring radially protrudes inwards with respect to the bearing surface 38, 40 of the associated lug 26c, 26d. Each end portion 52d, 54d axially faces the abutment surface 34 of the flange 26a of the rear plate. Each finger F of the clutch-release fork is axially located between the abutment surface 34 and one of the end portions 52d, 54d of the spring. The bearing surfaces 38, 40 of the lugs prevent the radial displacements of the clutch-release fork.

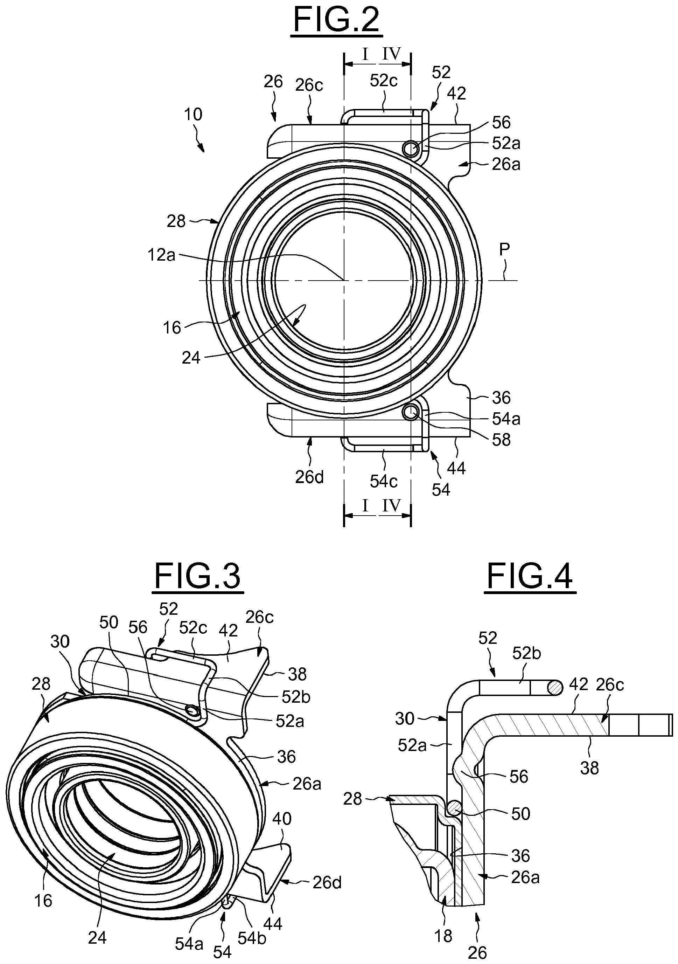

As above-mentioned, the rear plate 26 is designed to retain the spring 30 in the circumferential direction. As shown on Figures 2 to 4, the rear plate 26 comprises two local protrusions 56, 58 formed on the flange 26a. Each protrusion 56, 58 protrudes with respect to the abutment surface 36 of the flange 26a. Each protrusion 56, 58 extends axially. Each protrusion 56, 58 protrudes on the side of the rolling bearing 10. The protrusions 56, 58 radially face each other. In this example, each protrusion 56, 58 has a bump shape. The protrusions 56, 58 are identical one to another and symmetrical with respect to the axial median plane P containing the axis 12a of the rolling bearing.

Each protrusion 56, 58 is made by local plastic deformation of the flange 26a of the rear plate 26. Each deformation is achieved by upsetting some of the material of the flange 26a in order to cause the material to creep. The protrusions 56, 58 are obtained by axial pushing. The protrusions 56, 58 are made in one part with the rear plate 26.

The protrusion 56, respectively 58, is suitable for cooperating with the centring part 52, respectively 54, of the spring so as to prevent angular movement of said spring relative to the rear plate 26. Each protrusion 56, 58 is located near to the contact zone between the flange 26a of the rear plate and the associated radial portion 52a, 54a of the centring part of the spring. Each protrusion 56, 58 forms an abutment means to block an angular displacement of the spring 30 by contact between said protrusion and the associated radial portion 52a, 54a of the centring part of the spring. The protrusion 56 is disposed on the flange 26a in order to block an angular displacement of the spring 30 in the counterclockwise direction while the protrusion 58 is suitable for blocking an angular displacement of the spring 30 in the clockwise direction. The protrusions 56, 58 also enable to prevent radial displacement of the spring 30 relative to the rear plate 26.

In the disclosed example, a slight space is provided between each protrusion 56, 58 of the flange and the associated radial portion 52a, 54a of the centring part of the spring. Alternatively, said radial portion may be mounted in contact with the associated protrusion 56, 58.

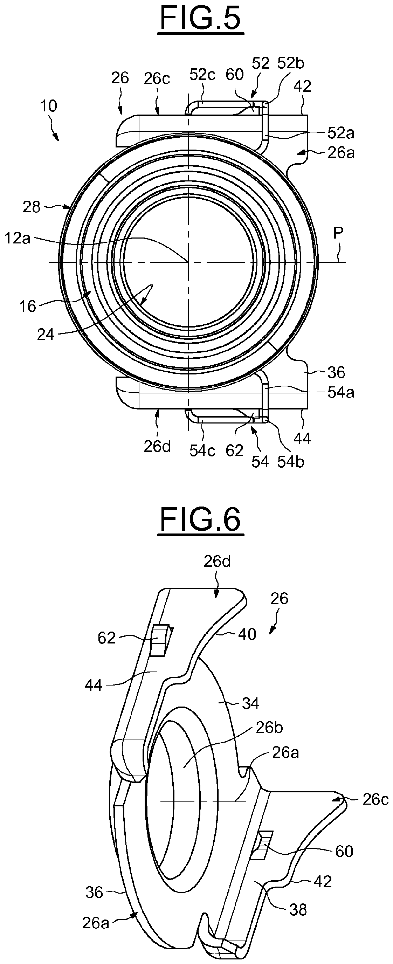

In this example, the protrusions 56, 58 of the flange are here formed on the flange 26a of the rear plate. In the example illustrated on Figures 5 and 6, in which identical parts are given identical references, the rear plate comprises two local protrusions 60, 62 each formed on one of the centring lugs 26c, 26d of the rear plate. Each protrusion 60, 62 protrudes with respect to the associated abutment surface 42, 44 of the centring lug. Each protrusion 60, 62 protrudes radially outwards. In this example, each protrusion 60, 62 is formed by partial cutting and bending of the associated centring lugs 26c, 26d. Each protrusion 60, 62 forms a tab. The protrusions 60, 62 are identical one to another and symmetrical with respect to the axial median plane containing the axis 12a of the rolling bearing.

The protrusion 60, respectively 62, is suitable for cooperating by contact with the axial portion 52b, respectively 54b, of the centring part of the spring so as to prevent angular movement of said spring relative to the rear plate 26. Similarly to the first example, the protrusion 60 is disposed on the centring lug 26c in order to block an angular displacement of the spring 30 in the counterclockwise direction while the protrusion 62 is disposed on the centring lug 26c to block an angular displacement of the spring 30 in the clockwise direction. In the disclosed example, a slight space is provided between each protrusion 60, 62 and the associated axial portion 52b, 54b of the centring part of the spring. Alternatively, said radial portion may be mounted in contact with the associated protrusion 60, 62. In another variant, it could be possible to foresee the protrusions 60, 62 on the flange 26a of the rear as it is the case in the first example. Alternatively, the bump-shaped protrusions 56, 58 as disclosed in this first example may also be provided on the centring lugs 26c, 26d.

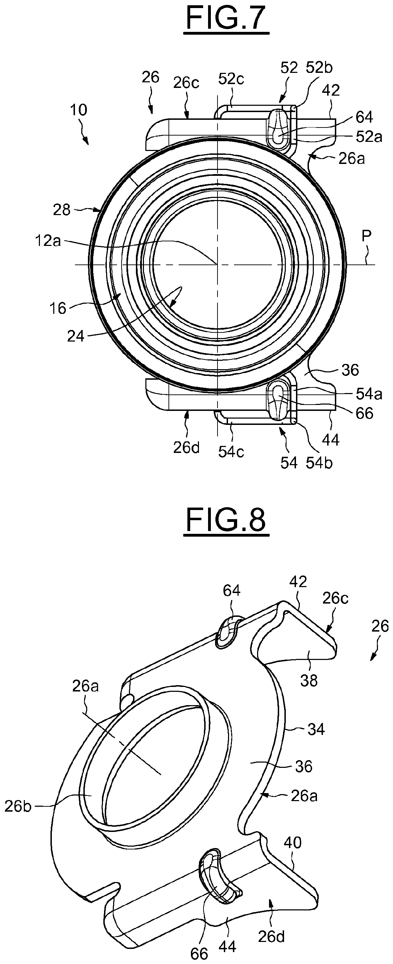

The example illustrated on Figures 7 and 8, in which identical parts are given identical references, differs from the previous examples only in that the rear plate 26 comprises two local protrusions 64, 66 each extending both on the flange 26a and on the associated centring lug 26c, 26d.

In the disclosed example, each protrusion 64, 66 extends on the flange 26a of the rear plate, along a part of a junction portion of the centring lug 26c, 26d having a curved shape and on said centring lug. Each protrusion 64, 66 protrudes axially with respect to the abutment surface 36 of the flange 26a of the rear plate, and protrudes radially with respect to the associated abutment surface 42, 44 of the centring lug. In this example, the protrusions 64, 66 also act as stiffener means to further increase the radial stiffness of the lugs 26c, 26d. The protrusions 64, 66 are identical one to another and symmetrical with respect to the axial median plane containing the axis 12a of the rolling bearing. The protrusions 64, 66 are made by local plastic deformations of the rear plate 26. Similarly to the first example, in this example, the protrusions 56, 58 also enable to prevent angular and radial displacements of the spring 30 relative to the rear plate 26.

In the illustrated examples, the rear plate comprises two protrusions each adapted to cooperate with one of the centring parts of the spring. Alternatively, it could be possible to foresee a rear plate having two protrusions adapted to cooperate with only one of the centring parts of the spring. In this case, the protrusions may be disposed on either side of said centring part. In the disclosed examples, the rear plate and the protrusions are made in one part. In a variant, each protrusion may be a separate and distinct part from the rear plate which is secured to said plate by any appropriate means.

The invention has been illustrated on the basis of a clutch bearing device comprising a rolling bearing provided with at least one row of rolling elements radially disposed between the inner and outer rings. Alternatively, the bearing may be a plain bearing or a sliding bearing.

## Claims

1. Clutch bearing device comprising a bearing (10) including an inner ring (16) and an outer ring (18), and an operating element (14) mounted into a bore of the bearing and secured to one of the rings, said operating element comprising a rear plate (26) provided with a flange (26a) and with at least one centring lug (26c; 26d) extending axially from said flange on the side opposite to the bearing, said operating element (14) further comprising a spring (30) provided with a main body (50) disposed axially on the side of a front abutment surface (36) of the flange (26a) of the rear plate, and with at least one centring part (52) extending from said body, located partly above an outer abutment surface (42; 44) of the centring lug (26c; 26d) and having an end portion (52d) axially facing a rear abutment surface (34) of said flange (26a), the rear plate (26) further comprises at least one protrusion (56; 58; 60; 62; 64; 66) provided on said centring lug (26c; 26d), protruding relative to the outer abutment surface (42, 44), and adapted to cooperate by contact with the centring part (52) of the spring so as to prevent angular movement of said spring relative to the rear plate at least in one direction, **charaterized in that** the outer abutment surface (42) extends axially.

2. Device according to claim 1, wherein said centring part (52) of the spring comprises a radial portion (52a) extending from the main body (50), an axial portion (52b) extending from said radial portion and located above the outer abutment surface (42; 44) of said centring lug, and the end portion (52d) connected to said axial portion.

3. Device according to claim 2, wherein said protrusion is adapted to cooperate by contact with the axial portion (52b) of said centring part of the spring.

4. Device according to any of the preceding claims, wherein the rear plate (26) comprises two centring lugs (26c, 26d) facing each other, the spring (30) comprising two centring parts (42) facing each other, and the rear plate (26) comprising at least two protrusions (56, 58; 60, 62; 64, 66) adapted to cooperate by contact with at least one of said centring parts so as to prevent angular movement of said spring relative to the rear plate in two opposite directions.

5. Device according to claim 4, wherein the protrusions of the rear plate are symmetrical with respect to an axial median plane (P) containing an axis (12a) of the bearing.

6. Device according to any of the preceding claims, wherein the rear plate (26) and said protrusion(s) are made in one part.

7. Device according to any of the preceding claims, wherein said protrusion(s) are made by local plastic deformation of the rear plate.

8. Device according to any of the preceding claims, wherein the rear plate (26) is made of stamped metal sheet.

9. Device according to any of the preceding claims, wherein the operating element (14) further comprises a casing (28) radially surrounding the bearing (10).

10. Device according to claim 9, wherein the main body (50) of the spring (30) is disposed into a groove formed between the casing (28) and the front abutment surface (36) of the flange of the rear plate.

11. Device according to any of the preceding claims, wherein the operating element (14) further comprises a sleeve (24) mounted into the bore of the bearing, the rear plate (26) being connected to the sleeve.

12. Device according to claim 11, wherein the sleeve (24) is overmouled onto the rear plate (26).

## Patentansprüche

1. Kupplungslagervorrichtung, ein Lager (10), das einen Innenring (16) und einen Außenring (18) enthält, und ein Betätigungselement (14), das in eine Bohrung des Lagers montiert und an einem der Ringe befestigt ist, umfassend, wobei das Betätigungselement eine mit einem Flansch (26a) versehene Rückwand (26) umfasst und wobei sich mindestens eine Zentriernase (26c; 26d) auf der dem Lager entgegengesetzten Seite axial vom Flansch erstreckt, wobei das Betätigungselement (14) ferner eine Feder (30) umfasst, die mit einem Hauptkörper (50) versehen ist, der axial auf der Seite einer vorderen Anschlagfläche (36) des Flanschs (26a) der Rückwand angeordnet ist, und wobei sich mindestens ein Zentrierteil (52) vom Körper erstreckt, der sich teilweise über einer äußeren Anschlagfläche (42; 44) der Zentriernase (26c; 26d) befindet und einen Endabschnitt (52d) aufweist, der einer hinteren Anschlagfläche (34) des Flanschs (26a) axial zugewandt ist, wobei die Rückwand (26) ferner mindestens einen auf der Zentriernase (26c; 26d) vorgesehenen Vorsprung (56; 58; 60; 62; 64; 66) umfasst, der in Bezug zur äußeren Anschlagfläche (42, 44) vorsteht und dazu eingerichtet ist, durch Kontakt mit dem Zentrierteil (52) der Feder zusammenzuwirken, um eine Winkelbewegung der Feder in Bezug zur Rückwand zumindest in eine Richtung zu verhindern, **dadurch gekennzeichnet, dass** sich die äußere Anschlagfläche (42) axial erstreckt.

2. Vorrichtung nach Anspruch 1, wobei das Zentrierteil (52) der Feder einen radialen Abschnitt (52a), der sich vom Hauptkörper (50) erstreckt, einen axialen Abschnitt (52b), der sich vom radialen Abschnitt erstreckt und über der äußeren Anschlagfläche (42; 44) der Zentriernase befindet, und den Endabschnitt (52d), der mit dem axialen Abschnitt verbunden ist, umfasst.

3. Vorrichtung nach Anspruch 2, wobei der Vorsprung dazu eingerichtet ist, durch Kontakt mit dem axialen Abschnitt (52b) des Zentrierteils der Feder zusammenzuwirken.

4. Vorrichtung nach einem der vorstehenden Ansprüche, wobei die Rückwand (26) zwei einander zugewandte Zentriernasen (26c, 26d) umfasst, wobei die Feder (30) zwei einander zugewandte Zentrierteile (42) umfasst und die Rückwand (26) mindestens zwei Vorsprünge (56; 58; 60; 62; 64; 66) umfasst, die dazu eingerichtet sind, durch Kontakt mit mindestens einem der Zentrierteile zusammenzuwirken, um eine Winkelbewegung der Feder in Bezug zur Rückwand in zwei entgegengesetzte Richtungen zu verhindern.

5. Vorrichtung nach Anspruch 4, wobei die Vorsprünge der Rückwand in Bezug zu einer axialen Mittelebene (P), die eine Achse (12a) des Lagers enthält, symmetrisch sind.

6. Vorrichtung nach einem der vorstehenden Ansprüche, wobei die Rückwand (26) und der Vorsprung/die Vorsprünge einstückig ausgebildet sind.

7. Vorrichtung nach einem der vorstehenden Ansprüche, wobei der Vorsprung/die Vorsprünge durch lokale Kunststoffumformung der Rückwand ausgebildet sind.

8. Vorrichtung nach einem der vorstehenden Ansprüche, wobei die Rückwand (26) aus gestanztem Metallblech ausgebildet ist.

9. Vorrichtung nach einem der vorstehenden Ansprüche, wobei das Betätigungselement (14) ferner ein Gehäuse (28) umfasst, das das Lager (10) radial umgibt.

10. Vorrichtung nach Anspruch 9, wobei der Hauptkörper (50) der Feder (30) in einer zwischen dem Gehäuse (28) und der vorderen Anschlagfläche (36) des Flanschs der Rückwand ausgebildeten Nut angeordnet ist.

11. Vorrichtung nach einem der vorstehenden Ansprüche, wobei das Betätigungselement (14) ferner eine Muffe (24) umfasst, die in die Bohrung des Lagers montiert ist, wobei die Rückwand (26) mit der Muffe verbunden ist.

12. Vorrichtung nach Anspruch 11, wobei die Muffe (24) auf die Rückwand (26) aufgeformt ist.

## Revendications

1. Dispositif de palier d'embrayage comprenant un palier (10) comportant une bague intérieure (16) et une bague extérieure (18), et un élément d'actionnement (14) monté dans un alésage du palier et fixé à l'une des bagues, ledit élément d'actionnement comprenant une plaque arrière (26) munie d'une bride (26a) et d'au moins une patte de centrage (26c ; 26d) s'étendant axialement à partir de ladite bride sur le côté opposé au palier, ledit élément d'actionnement (14) comprenant en outre un ressort (30) pourvu d'un corps principal (50) disposé axialement sur le côté d'une surface de butée avant (36) de la bride (26a) de la plaque arrière, et d'au moins une partie de centrage (52) s'étendant à partir dudit corps, située partiellement au-dessus d'une surface de butée extérieure (42 ; 44) de la patte de centrage (26c ; 26d) et ayant une partie d'extrémité (52d) faisant face axialement à une surface de butée arrière (34) de ladite bride (26a), la plaque arrière (26) comprend en outre au moins une saillie (56 ; 58 ; 60 ; 62 ; 64 ; 66) prévue sur ladite patte de centrage (26c ; 26d), faisant saillie par rapport à la surface de butée extérieure (42, 44), et adaptée pour coopérer par contact avec la partie de centrage (52) du ressort de manière à empêcher un mouvement angulaire dudit ressort par rapport à la plaque arrière au moins dans une direction, **caractérisé en ce que** la surface de butée extérieure (42) s'étend axialement.

2. Dispositif selon la revendication 1, dans lequel ladite partie de centrage (52) du ressort comprend une partie radiale (52a) s'étendant depuis le corps principal (50), une partie axiale (52b) s'étendant depuis ladite partie radiale et située au-dessus de la surface de butée extérieure (42 ; 44) de ladite patte de centrage, et la partie d'extrémité (52d) reliée à ladite partie axiale.

3. Dispositif selon la revendication 2, dans lequel ladite saillie est adaptée pour coopérer par contact avec la partie axiale (52b) de ladite partie de centrage du ressort.

4. Dispositif selon l'une quelconque des revendications précédentes, dans lequel la plaque arrière (26) comporte deux pattes de centrage (26c, 26d) se faisant mutuellement face, le ressort (30) comportant deux parties de centrage (42) se faisant mutuellement face, et la plaque arrière (26) comportant au moins deux saillies (56, 58 ; 60, 62 ; 64, 66) adaptées pour coopérer par contact avec au moins une desdites parties de centrage de manière à empêcher un mouvement angulaire dudit ressort par rapport à la plaque arrière dans deux directions opposées.

5. Dispositif selon la revendication 4, dans lequel les saillies de la plaque arrière sont symétriques par rapport à un plan médian axial (P) contenant un axe (12a) du palier.

6. Dispositif selon l'une quelconque des revendications précédentes, dans lequel la plaque arrière (26) et ladite ou lesdites saillies sont réalisées en une seule pièce.

7. Dispositif selon l'une quelconque des revendications précédentes, dans lequel ladite ou lesdites saillies sont réalisées par déformation plastique locale de la plaque arrière.

8. Dispositif selon l'une quelconque des revendications précédentes, dans lequel la plaque arrière (26) est en tôle emboutie.

9. Dispositif selon l'une quelconque des revendications précédentes, dans lequel l'élément d'actionnement (14) comprend en outre un boîtier (28) entourant radialement le palier (10).

10. Dispositif selon la revendication 9, dans lequel le corps principal (50) du ressort (30) est disposé dans une rainure formée entre le boîtier (28) et la surface de butée avant (36) de la bride de la plaque arrière.

11. Dispositif selon l'une quelconque des revendications précédentes, dans lequel l'élément d'actionnement (14) comprend en outre un manchon (24) monté dans l'alésage du palier, la plaque arrière (26) étant reliée au manchon.

12. Dispositif selon la revendication 11, dans lequel le manchon (24) est surmoulé sur la plaque arrière (26).
